# EUROPEAN PATENT APPLICATION

(11) **EP 2 221 660 A1**
(43) Date of publication of application: **25.08.2010**
(21) Application number: 08862981.1
(22) Date of filing: 27.08.2008
(51) Int. Cl.: G02F 1/1335, G02F 1/1337

(54) **LIQUID CRYSTAL DISPLAY DEVICE**

(30) Priority: 18.12.2007 JP 2007326103
(71) Applicant: Sharp Kabushiki Kaisha, Osaka-shi, Osaka 545-8522 (JP)
(72) Inventor: HONGO, Koki, Osaka-shi Osaka 545-8522 (JP); FUJIOKA, Kazuyoshi, Osaka-shi Osaka 545-8522 (JP); OGAWA, Katsuya, Osaka-shi Osaka 545-8522 (JP); FURUKAWA, Tomoo, Osaka-shi Osaka 545-8522 (JP); SAITOH, Masaaki, Osaka-shi Osaka 545-8522 (JP)
(74) Representative: Hoffmann, Jörg Peter
(86) International application number: PCT/JP2008/065285
(87) International publication number: WO 2009/078198

(57) **Abstract**

The present invention provides a transmissive or transflective liquid crystal display device in which interference fringes due to reflective light is suppressed and display qualities are improved.

A liquid crystal display device of the present invention include:
a first substrate;
a liquid crystal layer; and
a second substrate, formed in this order toward a display surface,
wherein at least one of the first and second substrates includes a dielectric protrusion protruded toward the liquid crystal layer,
the first substrate includes a reflective film being regularly arranged and overlapping with the dielectric protrusion as viewed in plan, and
the reflective film includes apluralityof convex portions protruded toward the display surface.

## Description

### TECHNICAL FIELD

The present invention relates to a liquid crystal display device. More particularly, the present invention relates to a transmissive or transflective liquid crystal display device including reflective films partly in a display region.

### BACKGROUND ART

Liquid crystal display devices are display devices in which an electric field formed between electrodes controls alignment of liquid crystal molecules, thereby controlling ON and OFF of liquid crystal display. Examples of the liquid crystal display devices include: a transmissive liquid crystal display device including a light source such as a backlight and using light from the light source as display light; a reflective liquid crystal display device including a reflector and using ambient light reflected by the reflector as display light. The transmissive liquid crystal display device is used mainly in a relatively dark environment such as an indoor environment. The reflective liquid crystal display device is used mainly in a relatively bright environment such as an outdoor environment.

The reflective liquid crystal display device includes a reflective film within a display region. However, if the reflective film has a flat surface (mirror surface), a display image becomes less visible due to reflection of ambient light. Patent Document 1 discloses a method in which a reflected light is diffused by concave and convex portions finely formed on a surface of a reflective film. Further, the concave and convex portions are unevenly arranged.

In addition to the above transmissive and reflective liquid crystal display devices, a transflective liquid crystal display device is known. The transflective liquid crystal display device can provide both transmissive display and reflective display. The transmissive display can be mainly performed in an indoor environment and the reflective display can be mainly performed in an outdoor environment. Therefore, the transflective liquid crystal display device can provide display with high qualities in any environment regardless of indoor and outdoor environment. Such a device has been included in many of mobile devices such as a cellular phone, a PDA, and a digital camera.

Recently, technologies of liquid crystal display devices such as the transflective liquid crystal display device, have been rapidly advanced and an improvement in display qualities has been strongly needed. [Patent Document 1]
Japanese Kokai Publication No. 2007-94332

### DISCLOSURE OF INVENTION

The present inventors made various investigations onmeans for improving display qualities of liquid crystal display devices. The inventors found that rainbow-colored fringes maybe generated in display in transmissive or transflective liquid crystal display devices. In addition, the inventors found that when reflective films are regularly arranged with a constant distance therebetween, interference fringes are generated in display due to interference of reflected light.

The present invention has been made in view of the above-mentioned state of the art. The present invention has an object to provide a liquid crystal display device in which interference fringes due to reflected light is suppressed and display qualities are improved.

The present inventors further made various investigation on means for preventing interference fringes due to reflected light. The present inventors noted a surface shape of a reflective film formed in a reflective region. The present inventors found that the proportion of an irregular reflected light component in reflected light is increased by forming convex portions on the surface of the reflective film, which reduces the probability of the occurrence of the interference of the reflected light even if it is necessary to form the reflective film in a regular pattern. As a result, the above-mentioned problems have been admirably solved, leading to completion of the present invention.

That is the present invention is a liquid crystal display device, comprising:
a first substrate;
a liquid crystal layer; and
a second substrate, formed in this order toward a display surface,
   wherein at least one of the first and second substrates includes a dielectric protrusion protruded toward the liquid crystal layer,
   the first substrate includes a reflective film being regularly arranged and overlapping with the dielectric protrusion as viewed in plan, and
   the reflective film includes apluralityof convexportions protruded toward the display surface.

The present invention is described in detail below.

The liquid crystal display device of the present invention includes the first substrate, the liquid crystal layer, and the second substrate, formed in this order toward a display surface. At least one of the first and second substrates includes a dielectric protrusion protruded toward the liquid crystal layer. Such a liquid crystal display device of the present invention can be a VA (vertical alignment) display or a MVA (multi-domain vertical alignment) display, for example. The VA LCD device can provide high contrast between white and black states by aligning liquid crystal molecules in a liquid crystal layer disposed between a pair of transparent electrodes vertically to substrate surface when no voltage is applied and aligning the molecules horizontally thereto when a voltage is applied. The MVA LCD device can provide wide viewing angle display by arranging dielectric protrusions protruded toward the liquid crystal layer in addition to the configuration of the VA display, thereby aligning the liquid crystal molecules in various directions toward the protrusions.

The first substrate includes a reflective film being regularly arranged as viewed in plan. Specifically, in the present invention, the reflective films are not entirely arranged but partly arranged on the first substrate in a specific pattern. Therefore, the liquid crystal display device of the present invention can be a transflective liquid crystal display device including a transmissive region and a reflective region within a display region or can be a transmissive liquid crystal display device including the reflective film partly within a display region. The reflective display cannot be performed by only the formation of the reflective films. In order to perform the reflective display, light for display needs to be controlled by a retardation film and the like. For example, if a film with a light-shielding property is formed on the first substrate to prevent light leakage due to partly formed regions which have no contribution to display, a reflective member with a light-shielding property is arranged in a transmissive liquid crystal display device. Therefore, the liquid crystal display device of the present invention is a transmissive or transflective liquid crystal display device, but not a reflective liquid crystal display device. According to the liquid crystal display device of the present invention, a light-shielding and reflective film is arranged to overlap with a dielectric protrusion to prevent leakage of transmissive light. Therefore, a contrast ratio, i.e., a value of "transmittance in a white state / transmittance in a black state" can be increased. In the transflective liquid crystal display device, the region in which the reflective film is formed can be further effectively used as the reflective region.

As used herein, "reflective film being regularly arranged as viewed in plan" refers to a configuration in which reflective films are arranged with a substantially constant distance when viewed from a direction perpendicular to the first substrate surface. Examples of such a configuration include a configuration in which the reflective films are arranged in the same position in each pixel constituting a display region and a configuration in which regions where the reflective films are arranged and regions where no reflective films are arranged are constituted in a striped pattern in the entire display region. As used herein, the term "striped pattern" means that different lines are alternately arranged. Such a plurality of lines may have a discontinuous portion, a bend portion, and/or a extending portion. The reflective film may have any shape and may be straight line or dotted line. The shape of the reflective film in a pixel may have a U, V, and/or W shape.

The first substrate includes a reflective film overlapping with the dielectric protrusion. As used herein, the term "overlap" means that two components are overlapped with each other when viewed from a direction perpendicular to the first substrate surface, and not be necessarily in contact with each other. It is preferred that the dielectric protrusions are regularly arranged to align liquid crystal molecules in the same direction. In the present invention, each of the dielectric protrusions is formed to overlap with the reflective film, and so inevitably the dielectric protrusions are also regularly arranged. According to the present invention, the reflective film is provided with the convex portions, and so the occurrence of interference fringes can be suppressed to maintain display qualities even if such dielectric protrusions are regularly formed for improvement of a viewing angle and the reflective films are regularly formed to overlap with the protrusions. As a result, the display qualities can be improved.

The reflective film includes apluralityof convex portions protruded toward the display surface. The convex portions formed on the reflective film surface diffuse reflective light. Therefore, even if the reflective films are arranged in a repeating pattern , interference of light does not occur. As a result, interference fringes in display can be suppressed. Such convex portions are preferably unevenly formed. As used herein, the phrase "unevenly formed" refers to a configuration in which the convex portions are unevenly spaced apart from each other, a configuration in which a height of the convex portions is not uniform, and/or a configuration in which a width of the convex portions is not uniform. Such configurations can more effectively diffuse light compared with a configuration in which the concave portions are uniform in distance therebetween, height, and width.

The configuration of the liquid crystal display device of the present invention is not especially limited as long as the above-mentioned components are particularly included. The liquid crystal display device may or may not comprise other components. In the liquid crystal display device of the present invention, liquid crystal molecules are aligned by the dielectric protrusion. And the display mode of the liquid crystal display device of the present invention is not particularly limited to the above-mentioned VA and MVA display modes, and may be a TN (twisted nematic) display mode or an IPS (in-plan switching) display mode.

It is preferred that each of the first and second substrates includes a transparent electrode,
the dielectric protrusion is arranged on a liquid crystal layer side-surface of the transparent electrode,
a distance between the transparent electrodes is substantially the same between a region where the reflective film is arranged and a region where the reflective film is not arranged. Transflective liquid crystal display devices commonly include a multi-gap layer for making a difference in a distance between the electrodes between a transmissive region and a reflective region. This is needed to eliminate a phase difference of display light between the transmissive region and the reflective region. The phase difference is created because transmissive light is transmitted through the liquid crystal layer once, whereas a reflective light is transmitted through it twice as incident light and reflected light. A distance that the reflective light travels through a liquid crystal layer is about twice as long as that the transmissive light travels. Therefore, the liquid crystal layer in the transmissive region is usually adjusted to have a thickness substantially twice as large as that in the reflective region. However, when such a multi-gap layer is formed, a difference in response speed between the transmissive region and the reflective region may be generated. In the present configuration, a dielectric member is therefore arranged between the pair of electrodes, which lowers an effective voltage applied to the liquid crystal layer partly. Alignment of liquid crystal molecules depends on the voltage level and the dielectric member can control the voltage level depending on a material or thickness thereof. Therefore, according to the present configuration, no multi-gap structure needs to be formed, and therefore a distance between the transparent electrodes can be substantially the same between the transmissive region and the reflective region. In the present configuration, the dielectric protrusion is formed instead of the multi-gap layer. It is preferred that the dielectric protrusions are regularly arranged. The effect of improving the response speed can be obtained by combining the present configuration and the configuration in which the dielectric protrusions are regularly formed. As a result, display qualities can be maintained and is totally improved.

It is preferred that the reflective film constitutes a pixel driving line. In the present description, the line for pixel driving is not limited as long as it is a line that is used for driving pixels. Examples of the line for pixel driving include a scanning line, a signal line, a storage capacitor line, and a drain-drawing line that is drawn from a transistor such as a TFT (thin film transistor). The line for pixel driving is usually made of a reflective material with a light-shielding property. By use of the line, the device structure can be simplified.

### EFFECT OF THE INVENTION

According to the liquid crystal display device of the present invention, even if the reflective films are regularly arranged, the plurality of convex portions formed on the surface of the reflective film effectively prevent interference fringes in display, caused by interference of light.

### BEST MODES FOR CARRYING OUT THE INVENTION

The present invention is mentioned in more detail below with reference to Embodiments using drawings, but not limited thereto.

### Embodiment 1

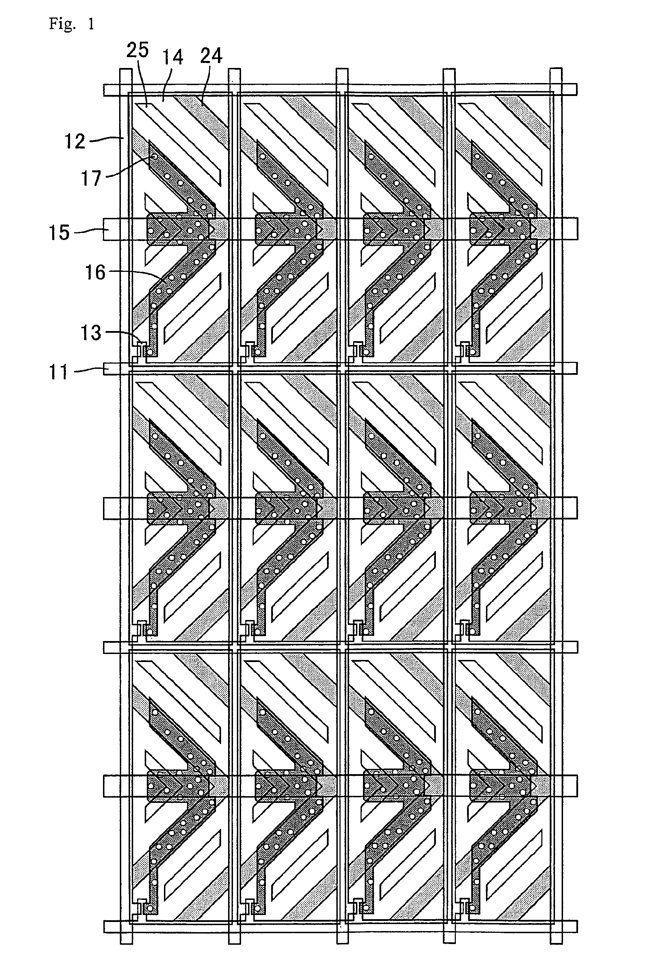

The liquid crystal display device of Embodiment 1 is a transflective liquid crystal display device including a transmissive region and a reflective region in one pixel. Fig. 1 is an enlarged plan view schematically showing the display surface of the liquid crystal display device in accordance with Embodiment 1. The liquid crystal display device of Embodiment 1 is an active matrix liquid crystal display device in which a plurality of pixels are arranged in a matrix pattern in the display surface and a switching element is formed in each pixel. The liquid crystal display device of Embodiment 1 is constructed by a pair of substrates when viewed from the cross-section of the display surface. One of the pair of substrates is an array substrate in which gate lines 11 and data lines 12 are perpendicularly arranged on a support board and a thin film transistor (TFT) 13 is arranged at the intersection of the lines as a pixel switching element. A pixel electrode 14 is formed in a region surrounded by the gate lines 11 and the data lines 12 in a layer different therefrom. An insulating film is disposed between the pixel electrode 14 and the lines 11 and 12. Such a region including pixel electrode 14 functions as one pixel of the display region. A storage capacitor line 15 is formed in a layer different from the pixel electrode 14 with an insulating film therebetween. The storage capacitor line 15 is formed passing through the center of the pixel and is extended parallel to the gate line 11. The storage capacitor line 15 and a drain-drawing line 16 that is extended from the TFT 13 formstorage capacitance therebetween.

The drain-drawing line 16 is made of a reflective material, and therefore the line 16 can reflect ambient light to produce display light. That is, in Embodiment 1, the drain-drawing line 16 is a reflective film and a region overlapping with the drain-drawing line 16 is a reflective region where the reflected ambient light is used as display light. When used as the reflective film, the drain-drawing line16 may be made of aluminum (Al), silver (Ag), tantalumnitride (TaN), titaniumnitride (TiN), molybdenum nitride (MoN), and the like.

In Embodiment 1, if the gate line, the data line, the storage capacitor line, and the like can be made of the reflectivematerial, such reflective lines may be extended to be used as the reflective film in stead of the drain-drawing line,

When the substrate is viewed in plan, the drain-drawing lines (reflective films) 16 are regularly arranged in a repeating pattern so that each in one pixel has a W shape and is located at the same position. In the entire display region, a region in which the reflective films 16 are formed and a region in which no reflective films are formed are alternately arranged in a striped pattern.

A plurality of convex portions 17 is formed on the surface of the drain-drawing line(reflective film) 16. In Fig. 1, although all of the convex portions 17 are schematically illustrated in a round shape and in the same size, the convex portions 17 preferably have different shapes from each other. Specifically, the convex portions 17 are different height, width, distance therebetween. Such a plurality of convex portions 17 can diffuse reflective light in various directions. As a result, the occurrence of rainbow-colored interference fringes can be effectively prevented.

For example, the convex portion 17 has a diameter of 5 to 10 µmand a distance between adjacent ones of the convex portions 17 is 2 to 3 µm. The convex portion 17 may have an elliptical shape, a polygonal shape, or the like in addition to the round shape. If the convex portion 17 does not have round shape, the maximum width thereof is preferably, for example, 5 to 10 µm.

The other substrate of the pair of substrates of the liquid crystal display device of Embodiment 1 is a counter substrate. In Embodiment 1, the counter substrate is provided with a linear or V-shaped dielectric protrusion (hereinafter also referred to as "rib") 24 when viewed from the display surface. The pixel electrode 14 in the array substrate 21 is provided with a linear or V-shaped slit 25 whose shape is similar to that of the rib 24. When the rib 24 is formed so as to protrude toward the liquid crystal layer, the liquidcrystalmolecules are obliquely aligned toward the rib 24. The slit 25 of the pixel electrode 14, which is a recessed portion whereas the rib protrudes toward the liquid crystal layer, also provides the same operation and effects as the rib. As a result, the liquid crystal molecules are obliquely aligned toward the slit 25. The rib 22 and the slit 25 are formed obliquely relative to longitudinal and transverse directions of the rectangular pixel electrode 14. The ribs 22 and slits 25 are alternately arranged to overlap with one pixel electrode 14. The shapes of the ribs 22 and the slits 25 that overlap with the pixel electrode 14 are both symmetry with respect to a line bisecting the pixel electrode 14 in the transverse direction (bisecting the long side of the rectangle). Thus, the liquid crystal display device of Embodiment 1 includes the ribs 24 and the slits 25 in a balanced arrangement. Therefore, a wide viewing angle can be achieved. Further, the liquid crystal display device of Embodiment 1 is a MVA liquid crystal display device.

The ribs 24 and the slits 25 in Embodiment 1 have a bend part and have a V shape in one pixel. In the entire display region, the ribs 24 and the slits 25 are regularly arranged in a repeating pattern and are arranged in a striped pattern. Such ribs 24 and slits 25, which are alternately and obliquely formed, align the liquid crystal molecules in an oblique direction and in a balanced alignment when viewed from the display surface.
This effectively further improves a viewing angle.

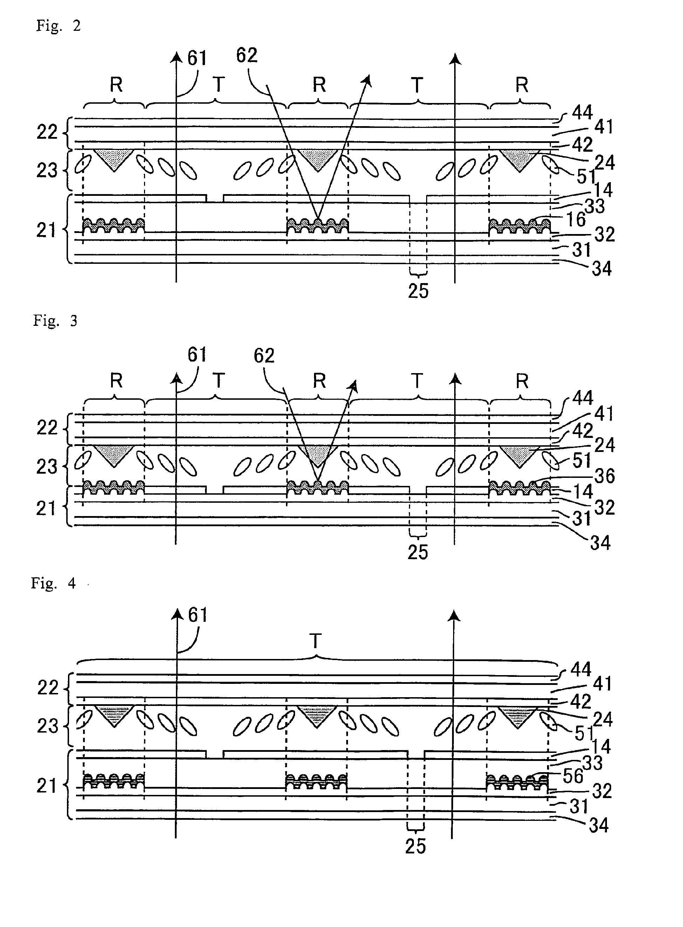

Fig. 2 is a cross-sectional view schematically showing a device configuration of the liquid crystal display device in accordance with Embodiment 1. As shown in Fig. 2, the liquid crystal display device of Embodiment 1 includes the array substrate (first substrate) 21, the liquid crystal layer 23, and the counter substrate (second substrate) 22, in this order toward the display surface. The array substrate 21 has a configuration in which a glass substrate 31, a base insulating film 32, the reflective film (drain-drawing line) 16, an interlayer insulating film 33, and the pixel electrode (transparent electrode) 14 are arranged in this order toward the liquid crystal layer 23. The region where the reflective film 16 is formed is a reflective region R in which reflective light 61 is used as display light and the region where no reflective film 16 is formed is a transmissive region T in which transmissive light 62 from light sources such as a backlight is directly used as display light. The surface of the base insulating film 32 is provided with a plurality of convex portions, thereby giving the similar convex portions to the reflective film 16 surface. As a result, such a reflective film 16 having the convex portions diffuses the reflective light 62, which can suppress the occurrence of rainbow-colored interference fringes due to the regularly formed reflective films 16. The convex portion in the reflective film 16 may have a cross section of a triangular, trapezoidal, rectangle, or square shape. Such shapes may include a curved portion.

Fig. 3 is a cross-sectional view schematically showing a device configuration of the liquid crystal display device in accordance with a modified example of Embodiment 1. As shown in Fig. 3, the reflective films 16 may be arranged independently from and adjacent to the pixel electrode 14. In such an arrangement, the reflective films 16 also serve as the pixel electrode 14. According to the configuration as shown in Fig. 3, no base insulating film needs to be formed, which leads to a reduction in thickness of the liquid crystal display device.

The reflective film 16 can be formed in the following procedure. A reflective material is applied on the base insulating film 32 to form a reflective film, and then a resist is formed on a desired region of the reflective film. The reflective film is patterned by exposure through a mask and development, and etching and resist stripping.

Instead of providing the reflective film 16 with the convex portions derived from those of the base insulating film 32, which is an underlayer of the film 16, the convex portions may be directly formed in the surface of the reflective film 16. The convex portions in the surface of the reflective film 16 may be formed in the following manner, for example. First, a smooth reflective film is patterned in a desired region, and a resist is then formed on the patterned reflective film. The resist is exposed through a mask which is unevenly provided with a plurality of openings having a diameter of several micrometers, and then developed, and etched, and, finally, the resist is stripped. According to such a configuration, no base insulating film needs to be formed, which leads to a reduction in thickness of the liquid crystal display device.

The counter substrate 22 has a configuration in which a glass substrate 41, a common electrode (transparent electrode) 42, and the rib (dielectric protrusion) 24 are arranged in this order toward the liquid crystal layer 23. When the rib 24 is formed so as to protrude toward the liquid crystal layer 23, the liquid crystal molecules 51 are obliquely aligned toward the rib 24 when viewed in cross-section of the array substrate 21 and the counter substrate 22. The slit 25 of the pixel electrode 14, which is a recessed portion whereas the rib protrudes toward the liquid crystal layer, also provides the same operation and effects as the rib. As a result, the liquid crystal molecules 51 are obliquely aligned toward the slit 25. Thus, a viewing angle can be improved attributed to such ribs 24 and slits 25. The rib (dielectric protrusion) 24 may have across section of triangular, trapezoidal, rectangle, or square. Such shapes may include a curved portion.

Liquid crystal materials with negative dielectric anisotropy are used for the liquid crystal layer 23. When no voltage is applied, the liquid crystal molecules 51 are aligned perpendicular to the surfaces of the array substrate 21 and the counter substrate 22. When a voltage not lower than a threshold is applied between the pixel electrode 14 and the common electrode 42, the liquid crystal molecules 51 are aligned horizontally thereto.

The array substrate 21 and the counter substrate 22 include polarizers 34 and 44, respectively, on a surface opposite to a surface facing the liquid crystal layer 23. The polarizers 34 and 44 are arranged in cross-Nicol, specifically, so designed that transmission axes are perpendicular to each other and absorption axes are perpendicular to each other. The liquid crystal display device of Embodiment 1 is a transflective liquid crystal display device. Therefore, each of the polarizers 34 and 44 is provided with a λ/4 retarder (not shown) on its surface facing the liquid crystal layer 23.

In the transmissive region T, the light having been transmitted through the polarizer 34 and the λ/4 retarder becomes a circularly polarized light. When a voltage not lower than a threshold is applied between the pixel electrode 14 and the common electrode 42, the circularly polarized light is transmitted through the liquid crystal layer 23, the λ/4 retarder, and the polarizer 44 to be used as display light.

In the reflective region R, the light having been transmitted through the polarizer 44 and the λ/4 retarder becomes a circularly polarized light. The circularly polarized light is then transmitted through the liquid crystal layer 23, reflected by the reflective film 16, and then enters the liquid crystal layer 23 again. As a result, a rotation direction of the circularly polarized light is reversed. When a voltage not lower than a threshold is applied between the pixel electrode 14 and the common electrode 42, the light transmitted through the liquid crystal layer 23 twice, the λ/4 retarder, and the polarizer 44 is used as display light.

The display mode of the liquid crystal display device of Embodiment 1 is a VA display mode (MVA display mode) in which liquid crystal molecules are aligned perpendicular to the surfaces of the array substrate 21 and the counter substrate 22 when no voltage is applied. And also, the display mode is a normally black mode in which when no voltage is applied, a black display is provided. Therefore, according to the liquid crystal display device of Embodiment 1, a high contrast ratio can be obtained.

The reflective film 16 is arranged to overlap with the rib 24. In Embodiment 1, the rib 24 serves not only as the dielectric protrusion but also as a multi-gap layer. Generally, the transflective liquid crystal display device is designed so that the thickness of the liquid crystal layer 23 (cell gap) in the transmissive region T and that in the reflective region R are different from each other. This is needed to eliminate a phase difference of display light between the transmissive region T and the reflective region R. The phase difference is created because the transmissive light 61 is transmitted through the liquid crystal layer 23 once whereas the reflective light 62 is transmitted through the liquid crystal layer 23 twice, i.e., the light 62 enters the layer 23 and is output through the layer 23. For example, if a transflective liquid crystal display device having such a multi-gap layer is used in low-temperature environments, for example, used in an outdoor vehicle, the response speed might be different between the transmissive region T and the reflective region R because the response speed of liquid crystals is significantly decreased at low temperatures. As a method for eliminating the difference in response speed, there is a driving system in which voltages applied to two successive frames are intentionally adjusted so that a voltage higher than a gray scale voltage of a subsequent frame is applied when a gray scale of the subsequent frame is higher than that of a present frame and a voltage lower than a gray scale voltage of the subsequent frame is applied when a gray scale of the subsequent frame is lower than that of a present frame. However, it is difficult to implement the driving system under conditions suitable the transmissive display T and the reflective display R.

In Embodiment 1, the rib 24, which is a dielectric member, is arranged between the pair of transparent electrodes 14 and 42. According to this configuration, a specific capacitance is formed in the rib 24 by applying a voltage between the transparent electrodes 14 and 42. As a result, a voltage applied to the liquid crystal layer 23 near the rib 24 is reduced. The alignment of the liquid crystal molecules 51 is determined by the level of the voltage applied to the liquid crystal layer 23 and the voltage can be easily adjusted by the material or the thickness of the rib 24. As a result, no multi-gap layer needs to be formed and the distance between the pair of electrodes 14 and 42 can be designed to have substantially the same in the transmissive region T and the reflective region R. Therefore, according to the liquid crystal display device of Embodiment 1, the response speed can be effectively improved, thereby improving display qualities. Further, the liquid crystal display device of Embodiment 1 is particularly suited for outdoor use. The device is mounted, for example, in vehicles and mobile phones.

As mentioned above, in Embodiment 1, in the entire display region, in order to effectively improve a viewing angle, the ribs 24 and the slits 25 are regularly arranged. In Embodiment 1, the rib 24 is formed to adjust the phase difference between the reflective light 62 which is transmitted through the reflective region R and the transmissive light 61 which is transmitted the transmissive region T. Therefore, the reflective film 16 is formed to overlap with the rib 24. As a result, the reflective film 16 is also regularly formed. This can be a factor causing occurrence of interference fringes, but in Embodiment 1, the convex portions 17 formed in the reflective film 16 diffuse the reflective light 61 even if such ribs 24 are formed.

As a result, according to the liquid crystal display device of Embodiment 1, the viewing angle and the contrast ratio can be further effectively improved, and in addition, the response speed can also be improved. Further, the occurrence of the rainbow-colored interference fringes can also be suppressed. Therefore, the display qualities are significantly improved in the liquid crystal display device of Embodiment 1 as compared with conventional liquid crystal display devices including the multi-gap layer or the irregularly arranged dielectric protrusion.

### Embodiment 2

A liquid crystal display device of Embodiment 2 is a transmissive liquid crystal display device in which only a transmissive region is formed in one pixel. The liquid crystal display device of Embodiment 2 is the same as Embodiment 1, except that both polarizers 34 and 44 include no λ/4 retarder on the liquid crystal layer 23 side-surfaces thereof. Fig. 4 is a cross-sectional view schematically showing a device configuration of the liquid crystal display device in accordance with Embodiment 2. As shown in Fig. 4, the configuration of the liquid crystal display device of Embodiment 2 is substantially the same as that of Embodiment 1. However, no λ/4 retarder is included, and therefore, the entire display region is a transmissive region T.

As also shown in Embodiment 1, the liquid crystal molecules 51 are obliquely aligned under the influence of the rib (dielectric protrusion) 24. However, in a region where the rib 24 is arranged, the phase difference is not appropriately adjusted, and therefore light leakage may be generated. Therefore, in Embodiment 2, a light-shielding film (reflective film) 56 is arranged to overlap with the rib 24, which prevents light leakage in black state. As a result, the contrast ratio is improved.

The liquid crystal display device of Embodiment 2 is a transmissive liquid crystal display device. Therefore the polarizers 34 and 44 are provided with no λ/4 retarder. A linearly polarized light having passed through the polarizer 44, positioned on the display surface side, and having passed the liquid crystal layer 23 twice is blocked by the same polarizer 44. As a result, a reflective light 62 cannot be used as display light in principle. A transmissive liquid crystal display device having a similar configuration as mentioned above, such a reflective light can be output at a specific gray scale, and in such a case and if the light-shielding (reflection) films 56 are regularly arranged, the interference fringes might occur. The liquid crystal display device of Embodiment 2 can suppress the occurrence of such interference fringes.

The present application claims priority to Patent Application No. 2007-326103 filed in Japan on December 18, 2007 under the Paris Convention and provisions of national law in a designated State, the entire contents of which are hereby incorporated by reference.

### BRIEF DESCRIPTION OF DRAWINGS

[Fig. 1]
   Fig. 1 is a plan view schematically showing the display surface of the liquid crystal display device in accordance with Embodiment 1.
[Fig. 2]
   Fig. 2 is a cross-sectional view schematically showing a device configuration of the liquid crystal display device in accordance with Embodiment 1.
[Fig. 3]
   Fig. 3 is a cross-sectional view schematically showing a device configuration of the liquid crystal display device in accordance with a modified example of Embodiment 1.
[Fig. 4]
   Fig. 4 is a cross-sectional view schematically showing a device configuration of the liquid crystal display device in accordance with Embodiment 2.

### EXPLANATION OF NUMERALS AND SYMBOLS

- 11:: Gate line
- 12:: Data line
- 13:: Thin film transistor (TFT)
- 14:: Pixel electrode (Transparent electrode)
- 15:: Storage capacitor line
- 16:: Drain-drawing line (Reflective film)
- 17:: Convex portion
- 21:: Array substrate (First Substrate)
- 22:: Counter substrate (Second Substrate)
- 23:: Liquid crystal layer
- 24:: Rib (Dielectric protrusion)
- 25:: Slit
- 31,: 41: Glass substrate
- 32:: Base insulating film
- 33:: Interlayer insulating film
- 34,: 44: Polarizer
- 36:: Pixel electrode (Reflective film)
- 42:: Common electrode (Transparent electrode)
- 51:: Liquid crystal molecule
- 56:: Light-shielding film (Reflective film)
- 61:: Transmissive light
- 62:: Reflective light
- T:: Transmissive region
- R:: Reflective region

## Claims

1. A liquid crystal display device, comprising:
a first substrate;
a liquid crystal layer; and
a second substrate, formed in this order toward a display surface,
wherein at least one of the first and second substrates includes a dielectric protrusion protruded toward the liquid crystal layer,
the first substrate includes a reflective film being regularly arranged and overlapping with the dielectric protrusion as viewed in plan, and
the reflective film includes apluralityof convexportions protruded toward the display surface.

2. The liquid crystal display device according to Claim 1,
wherein each of the first and second substrates includes a transparent electrode,
the dielectric protrusion is arranged on a liquid crystal layer side-surface of the transparent electrode,
a distance between the transparent electrodes is substantially the same between a region where the reflective film is arranged and a region where the reflective film is not arranged.

3. The liquid crystal display device according to Claim 1 or 2,
wherein the reflective film constitutes a pixel driving line.

4. The liquid crystal display device according to any one of Claims 1 to 3,
wherein the plurality of convex portions are unevenly spaced apart from each other.

5. The liquid crystal display device according to any one of Claims 1 to 4,
wherein a height of the plurality of convex portions is not uniform.

6. The liquid crystal display device according to any one of Claims 1 to 5,
wherein a width of the plurality of convex portions is not uniform.
